(19) Europäisches Patentamt
European Patent Office
Office européen des brevets

(11) **EP 1 953 982 B1**

(12) **EUROPEAN PATENT SPECIFICATION**

(45) Date of publication and mention
of the grant of the patent:
**27.04.2011 Bulletin 2011/17**

(51) Int Cl.:
***H04L 27/26*** *(2006.01)*     ***H04L 25/02*** *(2006.01)*

(21) Application number: **07290144.0**

(22) Date of filing: **05.02.2007**

(54) **Method and device for timing synchronization and neighbor scanning for cellular OFDM Systems**

Verfahren und Vorrichtung zur Zeitsynchronisation und Scanning von Nachbarzellen für zelluläre OFDM-Systeme

Procédé et dispositif de synchronisation temporelle et d'analyse voisine pour les systèmes cellulaires OFDM

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**06.08.2008 Bulletin 2008/32**

(73) Proprietor: **Sequans Communications**
**92073 Paris La Défense Cedex (FR)**

(72) Inventors:
• **Franovici, Bogdan**
**Bucarest (RO)**

• **Lemois, Emmanuel**
**75015 Paris (FR)**

(74) Representative: **Bentz, Jean-Paul et al**
**Novagraaf Technologies**
**122 Rue Edouard Vaillant**
**92593 Levallois-Perret Cedex (FR)**

(56) References cited:
**EP-A- 1 193 933**     **WO-A-97/41672**
**US-A1- 2006 114 812**

**Description**

The present invention relates generally to wireless communication systems, using transmission techniques like OFDM (Orthogonal Frequency Division Multiplexing) or OFDMA (Orthogonal Frequency Division Multiple Access), and more particularly to a set of techniques for timing synchronization and neighbor scanning in OFDM cellular systems. More precisely, according to a first aspect, the invention relates to a device for processing an incoming signal in a wireless communication system, said incoming signal being sent by a base station and comprising successive frames, each of which comprising at least a training symbol or preamble correlated to said base station, and a data symbol carrying message data.

Orthogonal Frequency Division Multiplexing (OFDM) is a transmission technique, where a data stream is multiplexed over multiple orthogonal subcarriers, yielding a longer symbol period which is advantageous in multipath conditions. Orthogonal Frequency Division Multiple Access (OFDMA) is a variant of OFDM, where the available spectrum is used simultaneously by multiple users which are using different orthogonal subcarriers.

OFDM generally decreases the Inter-Symbol Interference (ISI) by inserting a guard interval (GI) between OFDM symbols in order to maintain the orthogonality between the subcarriers, the guard interval being generally longer than the maximum delay spread of a channel.

Timing synchronization between a transmitter and a receiver must be obtained in order to maintain the orthogonality between the subcarriers and thus enabling proper demodulation of the data.

For cellular mobile applications for instance, different requirements are very important, among which:

- First, at the mobile station (MS) side, a permanent knowledge of the network topology is needed (serving base station (SBS), neighbor base stations (NBS), the associated signal quality measurements), which is accomplished through scanning. Thus, if the neighbor base stations and their signal quality are known, the mobile station is able to choose a serving base station by performing handover, with the purpose of either avoiding service interruption (for example when the signal quality from the serving base station becomes poor) or selecting a neighbor base station which gives a better signal quality and hence a higher data rate. The mobile station is required to do so in pedestrian environment as well as in vehicular environment. Scanning consists in searching for sequences matching known sequences transmitted by the base station referred to as preamble sequences. The scanning can be directed by neighbor advertising (i.e. the set of preambles the mobile station should search for is advertised by the serving base station) or autonomous (no a priori knowledge of the preamble to search for, all preamble sequences shall be scanned). A major difference between single cell (typically fixed) and cellular (typically mobile) networks is that in the latter there are multiple preamble sequences in order to discriminate between multiple base stations.

- Second, the mobile applications must have low power consumption to allow portable terminals with reasonable battery autonomy, which directly translates to low complexity algorithms. Furthermore, it is desired that the aforementioned scanning to be done quickly and preferably during data reception, minimizing the need for special scanning intervals, and hence allowing the MS to sleep more in order to conserve its power.

In addition, a reasonable time for power-up to operational state (in the order of seconds) is required. Also related to this, when service interruption occurs due to very harsh conditions, a quick recovery is required.

There is no literature on scanning for OFDM or OFDMA cellular systems. The existing solutions for timing synchronization in OFDM or OFDMA cover single-cell point-to-point or point-to-multipoint systems without the need for handover and neighbor scanning. In all of them, there is a unique training sequence (which can consist of multiple training symbols called preambles), and therefore only a time domain search is performed, and sometimes extended to also cover frequency uncertainty by hypothesis or by other means.

Among the existing solutions, one known technique is the frequency domain cross-correlation consisting in applying a Fast Fourier Transform (FFT) to the receive samples, multiplying the FFT output by the inverse of the preamble sequence in the frequency domain, and translating back to the time domain using an IFFT. The Frequency domain cross-correlation yields a discontinuity at the FFT symbol edges which is commonly overcome using the so-called overlap-add or overlap-save FFT de-convolutions that yield extra complexity. In all cases, one correlation result per input sample is required which is good enough for single cell systems because there is a unique well-known preamble to search. With this solution, part of the processing (FFT) is shared between several preamble hypotheses and correlation results can be very efficiently processed by using an IFFT to yield the channel impulse response for an expected preamble sequence. However, the overlap-add or overlap-save FFT de-convolution is still either too complex or too slow, especially because the computation of the correlation result per NFFT (nominal FFT size for the OFDM system) input samples requires an FFT of order greater than NFFT on one side, for each sequence searched multiplication with the inverse of the frequency domain known sequence padded with zeros and again, for each sequence searched an IFFT of order greater than NFFT to get the channel impulse response.

EP1193933 describes A method of synchronizing a receiver to a received orthogonal frequency division multiplexing (OFDM) signal having a preamble with short and long duration symbols, comprising the steps of:

> a) converting the received OFDM signal by Fourier transform to frequency domain components;
> b) processing the frequency domain components to timing components;
> c) deriving timing information from the timing components;
> d) applying the timing information to the received OFDM signal to synchronize the receiver; and
> e) all of said steps being performed during one of the short symbols.

The invention is disclosed according to the independent claims.

The subject-matter disclosed below in the description and going beyond the scope of the claims has to be considered as examples and not embodiments even if the words like "embodiment", "object", "invention", "spirit", or the like are used in said description.

Other techniques assume a rough synchronization point is known, but what is really needed and what will be described further is a comprehensive set of methods and algorithms to fulfill the requirements of a cellular system

For this purpose, an object of the invention is to provide a device mainly characterized in that it comprises at least:

- a first module digitizing and sampling the incoming signal;
- a second module demodulating said digitized and sampled incoming signal, and generating a corresponding frequency domain symbol;
- a timing synchronization and scanning module suitable for detecting at least a time offset of said training symbol by using said corresponding frequency domain symbol; and
- a timing post processing module for processing said timing offset and for generating an improved timing offset used to start the sampling of following incoming signal.

The timing synchronization and scanning module may be further suitable to provide one or more signal quality measurements of said training symbol, for example signal power, or noise plus interference power.

The device can further comprise a control module suitable for sending at least a command to the timing synchronization and scanning module via a command interface, and receiving at least a processing result from the timing synchronization and scanning module via statistics interface in response to said command.

The incoming signal being for example an OFDM signal type and the training symbol is preferably a well-known training symbol also called preamble.

The second module may implement means of a discrete Fourier transform, said means of a discrete Fourier transform are for example means of fast Fourier transform.

The timing offset may be processed by averaging, filtering or any other means reducing synchronization errors.

The timing synchronization and scanning module may be suitable for processing, based on commands from a control module, a plurality of training symbols sent at least by a serving base station and a neighbour base station, and providing timing offset and signal quality measurement of each training symbol to the control module, only the timing offset corresponding to the training symbol correlated to the serving base station are sent to the timing post processing module.

The training symbol is for example sent by different bases stations in neighbour cells.

The timing synchronization and scanning module can further process a plurality of successive frequency domain symbols, based on commands from the control module.

Thus the detection interval can be extended.

Preferably, the timing synchronization and scanning module comprises at least:

- a frequency domain correlation module controlled by the control module, for computing and generating at least a channel impulse response based at least on the frequency domain symbol corresponding to said training symbol correlated to the serving base station;
- a preamble processing module for determining if a specific preamble is present in said incoming signal, for generating a detection decision and for estimating the timing offset;
- a statistic processing module for sending at least the detection decision, and the timing offset to said control module, and for sending said timing offset of said training symbol corresponding to said serving base station to the timing post processing module.

The preamble processing module may also provide the signal quality measurement.

The statistic processing module (13) may also send the signal quality measurement.

For example, the frequency domain correlation module comprises at least:

- a look-up table module containing at least an inverse of a preamble,
- a deconvolution module multiplying the frequency domain symbol with the inverse of the preamble as generated by the look up table,
- a third module transforming the result of the multiplication in time domain,
- a windowing module multiplying the result of the deconvolution module (115) with a windowing function to eliminate the distortions caused by discontinuities.

The windowing module may be placed anywhere on the data path as long as it is in the frequency domain.
The frequency domain correlation module may further comprise:

- a decimation module for receiving a said incoming signal, and for generating, if needed, of a decimated version of the incoming signal, it may also be used to insert a frequency offset by using decimation offset.
- a multipage memory for temporary storing one or more decimated versions of one or more frequency domain symbols,
- a look-up table module containing at least a list of inverses of preambles, as indicated by the control module as an index in a pool of preambles,
- a third module transforming the result of the multiplication in time domain, using for example an inverse Fourier transform,
- a scheduler module for translating the commands sent by the control module into local control signals (e.g. decimation offset and decimation factor for the decimation module, control signal for the multipage memory, index of the preamble for the Look-up table).

For example, the preamble processing module comprises at least:

- a discriminator suitable for differentiating between the useful part of the input channel impulse response and a noise floor, and for outputting a discriminated channel impulse response,
- means for computing a timing offset from the discriminated channel impulse response.

The said preamble post processing module may comprise further a means of computing signal quality indicators.
For example, the discriminator compares the signal power to a predetermined threshold and interpreting the samples above the threshold as a useful signal, and by zeroing the samples below the threshold, considered noise and interference.
The preamble processing module is further capable of jointly processing at least two channel impulse responses corresponding to at least two successive symbols.
The preamble processing module is further capable to compute a metric for each of the two discriminated channel impulse responses corresponding to successive symbols, for instance the signal power.
The preamble processing module can select and discriminate the useful taps for both channel impulse responses by using the discriminated channel impulse response and the highest metric amongst the two metrics.
The preamble processing module may further combine coherently the channel impulse responses for the two symbols by using their constant phase relationship.
The timing offset may be computed as an average delay of the discriminated channel impulse responses.
The average delay of the discriminated channel impulse response CIR may be computed as follows:

- computing a sum of the product of power of discriminated channel impulse response by said variable delay;
- computing a sum of the power for the corresponding delay; and
- computing a division of previously computed measures.

The timing synchronization and scanning module may further comprise a preamble post processing module refining the results of the preamble processing module from two consecutive training symbols in order to correct the ambiguity in timing offset and the error in signal quality measurements.
The preamble post processing module is based on useful signal power on the two consecutive symbols to determine the error in timing offset and signal quality measurements, by look-up tables or equivalent means.
The detection interval for the timing offset can be limited to a predetermined or known interval and thus increasing the reliability o the detection.
A limited number of consecutive samples can be used for determining the timing offset.
The statistics processing module can also be used to find the best match for a preamble when the detection interval is a plurality of symbols by performing a maximum search, for example on power of the discriminated channel impulse symbol. The statistics processing module can be used in such a way that only the statistics for the best match are provided to the control module.

The statistics processing module can be used to filter the results by invalidating the detections for certain preambles, for instance if the timing offset is too high

The proposed device operates at the output of the Fast Fourier Transform module, on the extracted for demodulation (groups of N samples representing the FFT of the N-sample data symbols separated by guard intervals). Hence, the scanning is performed seamlessly during normal data reception.

Another object of the invention is a method for implementing a device described above, in a timing tracking of a serving base station mode, comprising at least the steps of:

- sending to the timing synchronization and scanning module at least:

    - an index of an expected preamble in said incoming signal,
    - an index of a frequency domain symbol corresponding to the expected preamble, and
    - a decimation factor, and
    - a decimation offset,

- said timing synchronization and scanning module executes the steps of:

    - generating a frequency domain symbol corresponding to said incoming signal,
    - detecting a time offset of said training symbol by using said frequency domain symbol,
    - sending a detection decision according to the expected preamble, and
    - sending said timing offset to said timing post processing module,

- said timing post processing module executed the steps of:

    - generating an improved timing offset, and
    - establishing a sampling instant for following incoming signal.

The timing synchronization and scanning module may return to a control module, via a statistics interface, the detection decision, the timing offset, and the signal quality indicators, if available.

Preferably, in a scanning for neighbor base stations in synchronous networks mode, the method further comprises at least the steps of:

- sending to the timing synchronization and scanning module at least:

    - a list of index of expected preambles in said incoming signal,
    - an index of a frequency domain symbol corresponding to the expected preambles,
    - a decimation factor, and
    - a decimation offset,

- said timing synchronization and scanning module executes at least the steps of:

    - generating a frequency domain symbol corresponding to said incoming signal,
    - detecting timing offsets of said training symbols by using said frequency domain symbol,
    - providing at least a set, said set comprising at least:

        - an index of an expected preamble among the list of index of expected preambles,
        - a corresponding detection decision according to said expected preamble of the set,
        - a corresponding timing offset,

The timing synchronization and scanning module may return to the control module via the statistics interface one set for each of the preamble index in the list, a set comprising:

- the preamble index,
- the detection decision,
- the timing offset, and
- the signal quality indicators, if available.

Advantageously, in a scanning for neighbor base stations in synchronous networks with large cells mode, the method further comprises at least the steps of:

- sending to the timing synchronization and scanning module at least:

  - a list of index of expected preambles,
  - an index of the first frequency domain symbol where the preambles are going to be searched in the incoming signal,
  - a number of frequency domain symbols where the preambles are going to be searched in the incoming signal,
  - a decimation factor, and
  - a decimation offset,

- the timing synchronization and scanning module executes at least the steps of:

  - generating frequency domain symbols corresponding to said incoming signal,
  - detecting timing offsets of said training symbols by using said frequency domain symbols,
  - providing at least a set, said set comprising at least:

    - an index of an expected preamble among the list of index of expected preambles,
    - a corresponding detection decision according to said expected preamble of the set,
    - a corresponding timing offset,

The timing synchronization and scanning module may return to the control module via the statistics interface one set for each of the preamble index in the list, a set comprising:

- the preamble index,
- the detection decision,
- the timing offset, and
- the signal quality indicators, if available.

In a scanning for neighbor base stations in asynchronous networks mode, the number of frequency domain symbols where the preambles are going to be searched may be equal to or greater than the number of symbols in a frame.
The method may comprise a power up algorithm which comprises:

- a cell search, by using the method in asynchronous networks mode, on all preambles in the network and in distinctive subsets,
- an acquisition step: for the successful detections, the measurements are refined by using the method in synchronous networks with large cells mode, on the set of the preambles that yielded positive detections during cell search,
- a tracking step: once a timing offset is refined, a preamble is chosen amongst the successful detections and the corresponding base station is chosen as a serving base station and the tracking is done using the method in a timing tracking of a serving base station mode,
- the scanning can start immediately after the successful synchronization in order to find neighbour base stations

In all the modes described above the timing synchronization and scanning module may also comprise the following steps:

- compute signal quality measurements,
- another output is added to the set: a corresponding signal quality measurement according to expected preamble of the set,

Other features and advantages of the invention will appear more clearly from the description of one embodiment of the invention made hereinafter, as an indication and by no means restrictive, with reference to the accompanying drawings, wherein:

- Figure 1 shows a generic data communication system;
- Figure 2 shows a typical cellular system;
- Figure 3 illustrates an OFDM signal;
- Figure 4 presents the structure of an embodiment of a receiver comprising the device according to an example of embodiment of the invention; and

- Figure 5 shows a timing synchronization and scanning module 10 structure;
- Figure 6 shows a structure of a frequency domain correlation module according to a embodiment of the invention;
- Figure 7 shows a possible implementation of preamble processing module;
- Figure 8 shows a possible implementation of a preamble post-processing module;
- Figure 9 shows the capturing windows for tracking and for the different scanning modes; and
- Figure 10 shows the observation windows used for tracking and for the different scanning modes.

An OFDM signal consists of multiple signals, each modulating a subcarrier. It is known in the art that a fundamental parameter of an OFDM system is the FFT (Fast Fourier Transform) size, denoted by N, N being an integer, for example for a preferred application N=1024. The sampling period is denoted by $T_s$, which is a system parameter chosen according to the bandwidth of the system. The data portion of an OFDM symbol consists of N samples and its length is $NT_s$. It is also known in the art that a guard interval consisting of $N_{GI}$ samples is inserted between successive OFDM symbols forming the OFDM signal in order to combat inter-symbol interference. Usually, in order to eliminate the self interference generated by the discontinuity, the guard interval contains a copy of the last $N_{GI}$ samples of the next data symbol and hence it is called cyclic prefix.

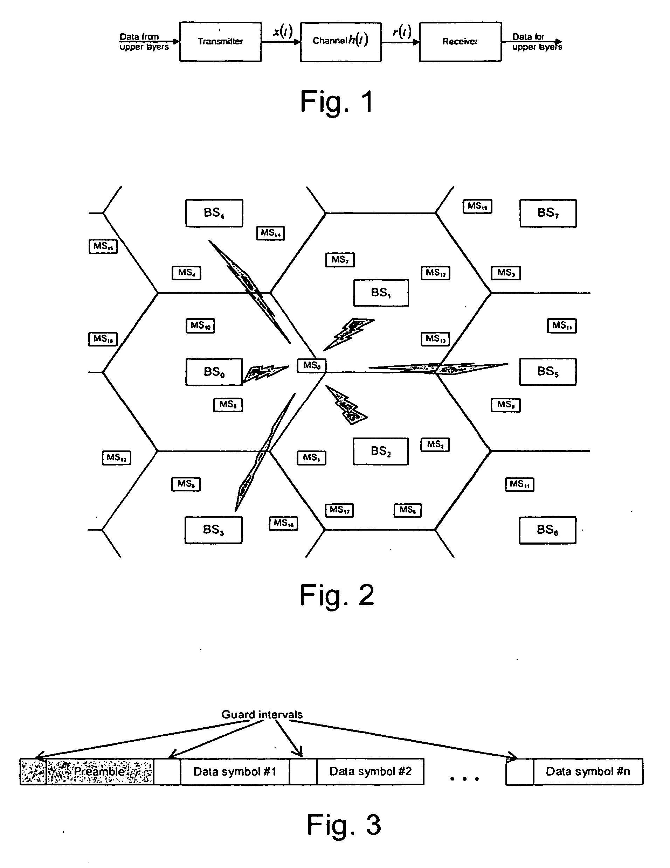

As shown in figure 3, each data frame of a wireless system may include one or more training symbols such as for example preamble symbols, or pilot symbols. A preamble symbol may be a training symbol at the beginning of each data frame. Typically, the preamble symbol may be used for various synchronization tasks. A pilot symbol may be a training symbol to provide tracking information, which may be associated for example with a spatial channel.

In the frequency domain, the transmitted symbol is denoted by $X_N(k)$, which is a sequence of complex numbers which will modulate the subcarriers. In the time domain, after the cyclic prefix is appended, the baseband signal can be expressed as:

$$x(t) = \sum_{k=-\frac{N}{2},\ldots,\frac{N}{2}-1} X_N(k)e^{j\frac{2\pi k}{NT_s}t}, \qquad t \in \left[-N_{GI}T_s, NT_s\right]$$

A generic data communication system is depicted in figure 1. It comprises a transmitter that converts upper layer data in an analog signal, a communication channel h(t), and a receiver which translates the received analog signal into data for upper layers.

The transmitted signal x(t) is altered by the communication channel. The channel impulse response for a multipath channel with $N_{taps}$ discrete propagation paths can be expressed as:

$$h(t) = \sum_{m=1,\ldots,N_{taps}} g_m \delta(t - \tau_m)$$

where:

gm is the gain for each tap (or propagation path)
$\delta$ is the Dirac impulse function
$\tau_m$ is the propagation delay for tap m

At the receiver side, the signal can be expressed as (the additive white noise is ignored for simplicity):

$$r(t) = x(t) \otimes h(t) = \sum_{m=1,\ldots,N_{taps}} g_m x(t - \tau_m)$$

A typical cellular system is depicted in figure 2, where BS stands for base station and MS stands for mobile station. It is known that an MS receives signals from multiple base stations, which can be harmful from interference point of view, but it is beneficial in the sense that the MS can perform handover when said MS detects that the signal from a BS is better than the signal of the BS that the MS is currently communicating with (serving BS).

For example, the BS sends periodically a well-known or current training sequence referred to as preamble. In a cellular system, the preambles are different among neighbor base stations, they belong to a set of I preambles $P_N^i$ :, $i = 0,...,I - 1$ and they are reused in the same manner as frequency is reused for classical TDMA cellular systems. Although a single preamble is considered in the equations, in reality the signal received is a combination of signals from multiple base stations each with its own preamble sequence.

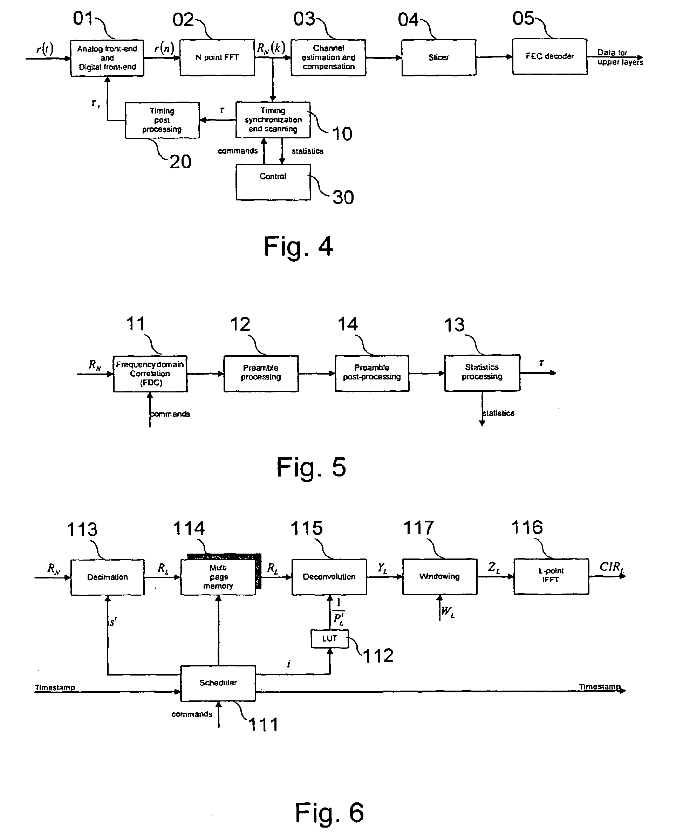

A preferred embodiment of the present invention is depicted in figure 4, where the MS has to perform the following tasks: first, it has to find the point in time where to start sampling the signal received from the serving base station for proper demodulation (or timing synchronization) and second, it has to scan for neighbor base stations in order to have a good picture of the timing offset and signal quality for serving base station and the neighbor base stations.

The analog signal, processed by an analog front-end and a digital front-end module 01 (for example an Analog to Digital converter), is converted to digital and sampled at a nominal sampling period:

$$r(n) = r(t)\big|_{t=nT_s + \tau_r}$$

The sampled signal $r(n)$ will be further processed by means of a discrete Fourier transform 02, for example a fast Fourier transform (FFT). When all the reflections fall within the guard interval (no inter-symbol interference), the structure of the received symbol is, after performing the discrete Fourier transform:

$$R_N(k) = F\,\mathrm{FT}\{r(n)\big|_{n=0,...,N-1}\} = X_N(k) \sum_{m=1,...,N_{taps}} g_m e^{j\frac{2\pi}{N}k\frac{(\tau_r - \tau_m)}{T_s}}, \qquad k = -\frac{N}{2}, \ldots, \frac{N}{2} - 1$$

The condition for reception with no inter-symbol interference is: $0 < \tau_m - \tau_r < N_{GI}T_s$, $m = 1,..., N_{taps}$, where $\tau_r$ is the result of a timing post processing module 20 shown in figure 4, which processes, by averaging, filtering or any other means, the result of timing synchronization and scanning module 10. The parameter $\tau_r$ is used to select the correct timing offset where the input signal is sampled, thus realizing the timing synchronization.

The timing synchronization and scanning module 10 can be used in two modes.

In a first operating mode, it will track a timing offset or delay $\tau$ of the preamble of the serving base station (which will be referred as the current preamble or current training symbol) in order to properly demodulate the data. It will also gather the timing offset along with signal quality measurements (like for example received signal power and signal to interference plus noise ratio) and send them to a control module 30 (via a statistics channel).

In a second operating mode, under the supervision of the control module 30 which will send commands to the timing synchronization and scanning module 10 (via the command channel), the timing synchronization and scanning module 10 will scan other preambles in an attempt to find neighbor base stations. The timing offset of the preambles scanned along with signal quality measurements are provided back to the control entity via the statistics channel. The control entity can be autonomous or it can be directed by neighbor advertising (information about the neighbor base stations sent by the serving base station).

A distinctive feature of the proposed receiver is that the timing synchronization and scanning module operates at the output of a discrete Fourier transform module 02, on the symbols extracted for demodulation (groups of N samples representing the fast Fourier transform of the N-sample data symbols separated by guard intervals). Hence, the scanning can be performed seamlessly during normal data reception.

The rest of the modules depicted figure 4 is typical for an OFDM receiver. The complex channel coefficients are estimated and are compensated for in the received signal by the channel estimation and compensation module 03. The compensated signal is further processed by a slicer module 04 and a forward error correction decoder 05. Finally, the data is sent to upper layers.

Now let us explain an example of an embodiment of a first operating mode, also called tracking mode for steady-state timing tracking, according to the invention.

In the following, the timing synchronization and scanning module is described showing the functionality of each sub-module.

The structure of timing synchronization and scanning module 10 is depicted figure 5.

First, the output of the discrete Fourier transform 02 or N-point IFFT, denoted by $R_N(k)$ is passed through a frequency domain correlation (FDC module) 11, which is controlled by the Control module 30 via the commands channel. The output of the FDC module 11 is a channel impulse response CIR for the specific preamble (or current training symbol) commanded by the control module (in the case of tracking the preamble is the current preamble, i.e. the preamble used by the serving BS). The channel impulse response CIR is further processed by a preamble processing module 12 to get estimates of the timing offset τ, a signal power as well as noise and interference power. The preamble processing module 12 also makes a decision if a specific preamble was present or not. The preamble post processing module 14 can be bypassed for tracking, and can be is used for example for combining the results of two successive OFDM symbols processed by other functions. A statistics processing module 13 can be used to send the detection of a specific preamble decision with the timing offset information and the signal quality measurement to the control module 30 via the statistics channel. The statistics processing module 13 can also be used to further filter results of the commanded operations. The timing offset τ of the current preamble will be provided to the timing post-processing module 20 for further processing to generate an improved estimate $τ_r$ used to start sampling by the analog front-end and digital front-end module 01, as explained above.

The structure of the Frequency domain correlation (FDC) module 11 is depicted in figure 6. A scheduler 111 is responsible of translating the commands from the control module 30 to local control signals and hence FDC module 11 can perform different functions under the supervision of the control module 30. For instance, the index of the preamble to be used in the correlation is input to a look-up table (LUT) 112 to get the needed preamble sequence. Also a decimation offset $s^i$ corresponding to the same index is provided to a decimation module 113. Each N-sample block from the output of the N-point FFT 02 is provided to the synchronization and scanning module 10 along with a timestamp corresponding to the first sample of the block in the time domain. The scheduler 111 is used to control for example a multi-page memory 114 and also the processing for the purpose of accommodating different functions. For tracking, the output of the decimation module 113 can be directly sent to a de-convolution module 115. However, in order to cope with frequency offset uncertainty, an additional offset can be applied to the decimation module corresponding to frequency offset hypothesis (with granularity equal to the inter-carrier spacing). For a single FFT output and a single preamble index more de-convolutions can be performed, one for each frequency offset hypothesis. The preamble sequences can also modulate only a part of the subcarriers (denoted here by M), equally spaced at intervals of T subcarriers which will yield a T-times repetition of a sequence in the time domain. A subcarrier set chosen is selected by a decimation offset $s^i$= 0,..., T-1. For the preferred application, M=284, T = 3 and $s^i$ =0,...,2 . The decimated frequency domain sequence is:

$$R_M(k) = R_N(T \cdot k + s^i) = P_M^i(k) \sum_{m=1,...,N_{taps}} g_m e^{j\frac{2\pi}{N}\left(T \cdot k + s^i\right)\frac{(\tau_r - \tau_m)}{T_s}}, \qquad k = -\frac{M}{2},...,\frac{M}{2} - 1$$

The decimation module 113 can be skipped if all of the subcarriers are used by the preamble (T =1) and when no frequency offset hypothesis are tested.

However, when extracting the carriers, the decimation offset is allowed to take larger values in order to also incorporate frequency offset hypothesis in units of one subcarrier spacing. For instance, if hypothesis $f_{hyp}$ = -3,...,3 subcarrier spacing need to be tested, the decimation offset range is $s_{hyp}^i = -3, \ldots, T + 2$ .

For an efficient implementation of discrete Fourier transform, a subset of $L \leq M$ subcarriers may be used further (a power of 2 for instance). Due to frequency offsets expected at the receiver, the part in the center of the spectrum is selected. However, a different choice can be imagined. For instance, in a preferred application only L = 256 subcarriers will be used out of the M = 284 modulated, for only a small performance loss.

$$R_L(k) = R_M(k) = P_L^i(k) \sum_{m=1,...,N_{taps}} g_m e^{j\frac{2\pi}{N}\left(T \cdot k + s^i\right)\frac{(\tau_r - \tau_m)}{T_s}}, \qquad k = -\frac{L}{2},...,\frac{L}{2} - 1$$

And after de-convolution with the expected preamble sequence we obtain (the other preambles, although not shown in the equation will be whitened along with all the interferers):

$$Y_L(k) = \frac{R_L(k)}{P_L^i(k)} = \sum_{m=1,...,N_{taps}} g_m e^{j\frac{2\pi}{N}\left(T \cdot k + s^i\right)\frac{(\tau_r - \tau_m)}{T_s}}, \qquad k = -\frac{L}{2},...,\frac{L}{2} - 1$$

The inverse of the preamble sequences $\dfrac{1}{P_L^i(k)}$ are generated by the look-up table (LUT) 112.

Further a means of inverse discrete Fourier transform module (or L-point IFFT module) 116 analyzes the content of $Y_L$ which will give us an estimate of the channel impulse response ($CIR_L$). Prior to the L-point IFFT module, $Y_L$ will be multiplied with a windowing 117 function $W_L$ in order to remove the discontinuity at the edges of the transmitted spectrum (between $Y_L(-L/2)$ and $Y_L(L/2-1)$ for example).

The windowing 117 can be placed after the de-convolution module 115 or anywhere from the output of the N- point FFT module 117 to the input of the L-point IFFT module 116.

The channel impulse response $CIR_L$ is further analyzed by the preamble processing module 12, which functions are: first, to decide if the preamble is present, second to compute the timing offset $\tau$, and third to compute signal quality measurement.

The input $CIR_L$ is the channel impulse response, but it should be kept in mind that it is sampled with a sampling period equal to $\dfrac{N}{LT}T_s$ in this embodiment.

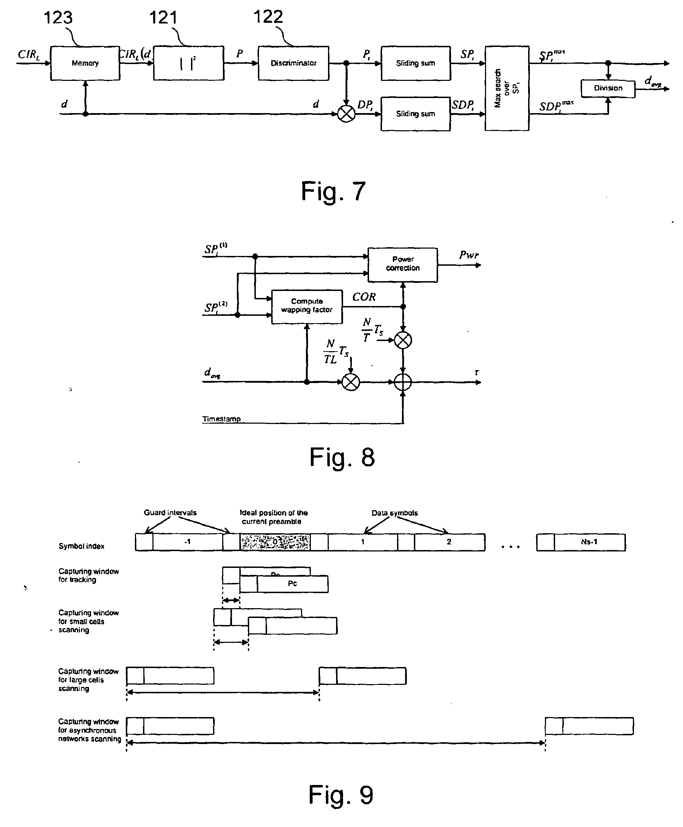

A possible implementation of preamble processing is depicted in figure 7. Those skilled in the art can imagine different implementations without departing from the intent of the present invention.

The delay d will be used to index the $CIR_L$ :

$$ d = d_{offset} - \frac{L}{2}, \ldots, d_{offset} + \frac{L}{2} - 1 \ . $$

The interval of d can be restricted to a smaller interval centered around an expected bias $d_{offset}$, if the control entity decides to track the serving base station preamble in a smaller interval called tracking window. If there is no information on the expected bias of the timing offset, $d_{offset}$ shall be set to zero.

The power of the $CIR_L$ is then computed as $P(d) = |CIR_L(d)|^2$, by the power module 121. Further, a discrimination function is applied to separate the actual channel impulse response CIR from noise floor. A threshold function is applied by the discriminator 122 to the power of the CIR, where $P_{th}$ is a power threshold (for example based on the calculated noise floor and depending on the needed false alarm / non-detection performance), and the result of the discrimination function is:

$$ P_t(d) = \begin{cases} P(d) & when \ P(d) \geq P_{th} \\ 0 & when \ P(d) < P_{th} \end{cases} $$

The detection is successful if at least one value of $P_t(d)$ is non-zero. Two sliding sums are used for $P_t(d)$ and $d \cdot P_t(d)$ to measure in a wanted window referred to as summing window, typically equal to the guard interval length.

$$ SP_t(n) = \sum_{d \in n + <summing\ window>} P_t(d) $$

$$ SDP_t(n) = \sum_{d \in n + <summing\ window>} d \cdot P_t(d) $$

The measure $n \in <$ tracking window $>$ is the center of the summing window chosen based on the expected variation of the channel impulse response.

The maximum value of $SP_t$ is kept (the CIR with the highest power in a window) as well as the corresponding $SDP_t$. The average delay is computed by a simple division of the two values kept:

$$d_{avg} = \frac{SDP_t(n_{opt})}{SP_t(n_{opt})} = \frac{\sum_{d \in n_{opt} + <window>} d \cdot P_t(d)}{\sum_{d \in n_{opt} + <window>} P_t(d)}$$

The timing offset detection is limited to the interval $d_{avg} \in d_{offset} + \left[-\dfrac{L}{2}, \dfrac{L}{2} - 1\right]$. However, if the tracking window and summing widow are smaller, the detection will be limited to the tracking window plus the summing window and centered around the bias $d_{offset}$.

Although the average delay is presented as an example, different measurements are possible without departing from the intention of this invention.

The discriminated power of the channel impulse response $P_t(d)$ will be used to evaluate the power of the wanted signal. For the noise plus interference power measurements, the measure before discrimination will be used. The samples outside the a priori known interval of expected time offsets can be used. For instance, assuming half of the $CIR_L$ samples (the ones at the edges) contain noise floor only, the noise plus interference power spectral density can be estimated:

$$psd_{N+1} = \frac{2}{L} \left\{ \sum_{d=d_{offset} - \left[\frac{L}{4}+1,...,\frac{L}{2}\right]} P(d) + \sum_{d=d_{offset} + \left[\frac{L}{4},...,\frac{L}{2}-1\right]} P(d) \right\}$$

The same $psd_{N+1}$ can be used in the discriminator (for instance $P_{th}$ can be calculated as $psd_{N+1}$ multiplied with a constant). Alternatively, the noise plus interference power measurements can be measured by subtracting the power of the discriminated signal from the total power.

For tracking, no corrections are performed in the Preamble post-processing module 14. The timing offset of the received preamble is computed as the sum of the timestamp at the beginning of the OFDM symbol analyzed and the measured offset with respect to the beginning of the symbol:

$$\tau = \text{Timestamp} + d_{avg}\frac{N}{LT}T_s$$

The statistics processing module 13 will pack the detection decision with the timing information and the signal quality measurements (signal power, noise and interference power, signal to noise plus interference ratio, etc.) and send the information to the control module 30 via the statistics channel.

It can also be used to further filter the results of the commanded operations, for instance based on the calculated timing offset r, a detection can be invalidated if the timing offset is too high, and it will be disregarded by the timing post-processing module. This way, the system will be more robust and it will stay locked even in harsh conditions. Those skilled in the art can imagine other criteria to invalidate the detection of the preamble.

In the sections above, it has been described how the proposed receiver performs timing synchronization and associated signal quality measurements, by processing the preamble sent by the serving base station.

However, the other function of the proposed system is neighbor scanning, which translates into processing the received signal in an attempt to find the preamble sequences sent by the neighbor base stations and to measure the timing offset and signal quality indicators.

Now let's describe the second operating mode, also called scanning.

There are two types of network deployment:

- Synchronous (the base stations of the network are synchronized; they have the same frame size and the transmission time of the preambles fall into a limited and known time interval). In this case, the preambles of neighbor base stations are searched in a limited interval around the known position of the preamble of the serving base station.
- Asynchronous (there is no relationship between the timings of different base stations). In this case the preambles of neighbor base stations are searched in the whole frame, as they can be anywhere.

For synchronous networks, two cases are considered:

- Small cells: the timing difference due to the propagation delay is small enough and hence a single OFDM symbol is enough for the detection.
- Large cells: the timing difference due to the propagation delay is large and the receiver needs to process more symbols centered around the preamble of the serving base station in order to detect the preambles of the neighbor base stations.

Figure 9 shows the capturing windows (i.e. the timing offsets that are unambiguously detectable) for tracking and for the different scanning modes.

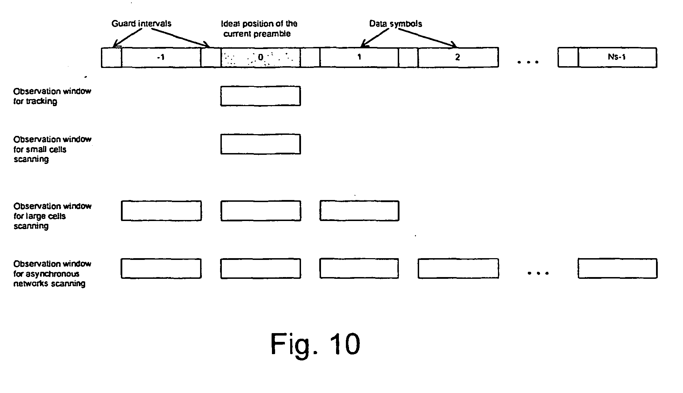

Figure 10 shows the observation windows used for tracking and for the different scanning modes. The observation windows are $N$-sample windows in the time domain, sampled with the nominal sampling period $T_s$ and separated by $N_{G1}$ samples that are discarded. They are known in the art as FFT windows, since the $N$-tuples will be processed further by an $N$-point FFT module.

For large cells, scanning using for example three symbols was considered. However, those skilled in the art can choose a larger interval if the expected delay spread of the preambles in the network is larger.

For scanning for synchronous networks with small cells, the processing is similar to tracking (first operating mode) of the current preamble, with some differences which will be described in the following.

A major difference will be in the scheduling and memory management. The control module 30 can request several preambles to be tested on the same FFT window. Moreover, the preambles can have different decimation offsets. In this case, the distinct decimated versions are stored in different pages of the multi-page memory, and they can be processed further without real-time constraints during the rest of the frame. For a given decimation offset all the preambles having that specific decimation offset may be tested.

It is desirable that the windowing is done prior to the de-convolution in order to do it once for all preambles using the same decimation offset.

For the preamble processing, the tracking and summing windows may be chosen in order to maximize the capturing window.

The scanning for synchronous networks with large cells is somewhat different: the $N$-point FFT results for all of the needed symbols are stored after decimation (three symbols in the example) in order to allow non-real time processing of many preamble sequences. In order to minimize the memory size, the group of preambles that need to be tested should have the same decimation offset.

However, other scheduling and storing mechanisms can be imagined, for instance if a small number of preambles need to be tested they can be processed in real time taking advantage of the reduced complexity (the complexity of an $L$-point IFFT is less than $L/N$ the complexity of an $N$-point FFT), using the memory as a buffer or as a FIFO (first in first out).

The preamble processing module is modified in order to jointly process two adjacent OFDM symbols since the preamble can be anywhere in between symbols due to large delay spread.

If a preamble is part on the first symbol and part on the second symbol, the phase relationship between the $CIR_L$ for the two symbols is known (depends on the length of the guard interval and the decimation offset). The known phase relationship might be used for coherent combining.

One way to modify the preamble processing is to separately run it for each of the two symbols, and then use the stronger of the two discriminated CIRs ( $P_t^{(i)}(d), i = 1,2$ ) to select the taps for both CIRs:

$$P_t^{(M)}(d) = \begin{cases} P_t^{(1)}(d) & \text{if } \max\{SP_t^{(1)}(n)\} > \max\{SP_t^{(2)}(n)\} \\ P_t^{(2)}(d) & \text{otherwise} \end{cases}$$

where

$$SP_t^{(i)}(n) = \sum_{d \in n + <summing\ window>} P_t^{(i)}(d), \quad i = 1,2$$

$$P_t^{combined}(d) = \begin{cases} P^{(1)}(d) + P^{(2)}(d) & \text{when } P_t^{(M)}(d) > 0 \\ 0 & \text{when } P_t^{(M)}(d) = 0 \end{cases}$$

The same sliding sum mechanism is used on the combined discriminated $P_t^{combined}(d)$.

Those skilled in the art can imagine different ways to jointly process the two symbols, without departing from the intention of this invention.

There is also a deterministic amplitude relationship between the $CIR_L$ for the two adjacent symbols, depending on the position of the preamble in the two symbols. The amplitude relationship will be used to solve the timing uncertainty due to the $T$-times repetition of the preamble (the preamble consists of $T$-times repetition of a sequence of length $\frac{N}{T}T_s$).

The preamble processing module 14 illustrated in figure 8 will have in this case a set of outputs for each pair of adjacent OFDM symbols.

The preamble post processing module will be used to remove the timing uncertainty based on the power of the two discriminated CIRs (the correction factor is an integer multiple of the length of the basic sequence repeated $\frac{N}{T}T_s$ and is determined by look-up tables or threshold methods or any other means, as a function of timing offset and power of the two discriminated CIRs).

$$\tau = \text{Timestamp} + d_{avg}\frac{N}{LT}T_s + COR\frac{N}{T}T_s = \text{Timestamp} + (d_{avg} + L \cdot COR)\frac{N}{LT}T_s$$

For the power statistics, another correction is applied (the power is split between the two symbols). Again, the power correction factor is determined by look-up tables or threshold methods or any other means, as a function of timing offset and power of the two discriminated CIRs.

In the statistics processing module 13, a maximum search is performed on the partial results. For detection on $K$ symbols (3 in our example), $K$-1 pairs of symbols are processed by the preamble processing module ({1,2}, {2,3}, ...,{K-1,K}), hence $K$-1 sets of statistics are available, one for each pair processed. The $K$-1 results are further refined by the preamble post-processing module.

The statistics processing module will first determine if a detection occurred (at least one of the $K$-1 results indicates a detection), then a maximum search is performed on the power measurement, and the other corresponding measurements are packed with the power measurement and sent to the control entity via the statistics channel. Conversely, all of the measurements can be provided to the control entity without filtering by maximum search. Moreover, only the measurements for the detections can be provided.

The processing for asynchronous networks is very similar to the processing for large cells in synchronous networks, the only difference being that the search interval is considerably larger, in order to cover a frame length (the preamble is sent every frame at fixed positions in a periodic fashion), as shown in figure 9 and in figure 10. Consequently, since the processing is done on a large number of symbols, in order to use a reasonable amount of memory, the processing will be done in real-time using the memory 123 as a buffer or as a FIFO, and a smaller number of preambles can be processed in a multiplexed fashion. This is possible because of the reduced complexity of the $L$-point IFFT compared to the $N$-point FFT. During the processing of the $N$-point FFT, more than $N/L$ preambles can be processed (more than four in the preferred application).

It has been shown that the proposed device is capable of scanning for neighbor base stations in all types of deployments. However, the proposed invention is flexible enough to accommodate other functions like soft combining for macro-diversity, multiple receive chains, etc. Other functions can be accommodated by combining the basic functions described in this invention.

Using the aforementioned functions in reversed order, the power up strategy becomes evident. Due to the low complexity, a fast power-up is possible. First, a cell search is performed (using scanning for asynchronous networks for a subset of the preambles and for a given frequency offset hypothesis). The preambles detected are further analyzed with a 3-symbol acquisition window (using scanning for synchronous networks, large cells).

If successful, the frame structure is established and the receiver will enter the steady-state tracking mode (optionally synchronous scan for small cells can be used to select the best base station).

Once the receiver is in tracking mode, it may immediately continue scanning in order to find a better base station. At any time, the scanning can be done in parallel with normal data reception in a seamless fashion.

Those skilled in the art can imagine different power-up strategies and different functions for the described apparatus, without departing from the intent of the present invention.

Thus, using the aforementioned techniques, a comprehensive set of techniques is provided to ensure timing synchronization from power-up to functional steady-state timing tracking. Furthermore, using these techniques, all types of scanning are available and therefore they can be used in all type of deployments, for example in mobile point-to-multipoint applications deployed in a cellular network.

The low complexity of the algorithms yields the low power consumption in mobile applications, allowing for instance portable terminals with reasonable battery autonomy. The scanning can be done quickly and during the data reception, minimizing the need for special scanning intervals, and hence allowing the mobile station to sleep more in order to conserve its power. In addition, a reasonable time for power-up to operational state (in order of seconds) is possible, and when service interruption occurs due to very harsh conditions, a quick recovery is possible.

A preferred application is the OFDMA physical layer based on a 1024 point FFT of the IEEE 802.16 standard.

This invention applies (but it is not limited) to mobile stations.

Therefore, the invention offers:

- a simple algorithm for steady-state timing tracking, which consists of a correlation with an expected training sequence, carried out in the frequency domain and then transformed back to time domain, where the channel impulse response can be discriminated from the noise. One advantage of the invention is that all of the processing is done using discrete sets of samples by evaluating only the FFT result of fixed FFT windows spaced by the nominal cyclic prefix. Hence, a lot of the processing can be shared with a demodulator, and parallel processing is possible;

- a computationally efficient scanning for synchronous scanning in small cells (that is to say in the case where training sequences are synchronous among base stations of the network and the search domain is not far from the training sequence of the serving base station, using only one OFDM symbol for the detection), by using a specific scheduling of the functional module. Notably, it will seamlessly be done during normal operation;

- a computationally efficient scanning for synchronous scanning in large cells (that is to say in the case where the search domain is larger, using for example one OFDM symbol before and one OFDM symbol after the symbol containing the training sequence of the serving base station for the detection), by scheduling the functional module to run a first detection over the symbol before and the symbol containing the training sequence of the serving base station, and a second detection over the symbol containing the training sequence of the serving base station and the symbol after, and the choosing the best result of the detections; and

- an efficient scanning for power-up cell search or for scanning asynchronous base stations during normal operation, by using the processing over two OFDM symbols and extending the interval to the known length of frame.

Therefore a comprehensive set of methods is provided to ensure timing synchronization from power-up to functional steady-state timing tracking, and all types of scanning are available and can be used in all type of deployments.

## Claims

1. Device for processing at least an incoming signal in a wireless communication system, said incoming signal comprising a plurality of signals coming from a plurality of base stations (BS), each signal comprising successive frames and each of said frames comprising at least a training symbol or preamble correlated to a base station (BS) and a data symbol carrying message data,
said device comprising at least:

   - a first module (01) digitizing and sampling the incoming signal;
   - a second module (02) demodulating said digitized and sampled incoming signal, and generating a corresponding frequency domain symbol ($R_N$);
   - a timing synchronization and scanning module (10) suitable for performing in a first operating node timing synchronization with a serving base station by detecting at least a time offset ($\tau$) of the preamble correlated to said serving base station from said corresponding frequency domain symbol ($R_N$) ;

   **characterized in that** said timing synchronization and scanning module (10) is suitable for performing in a second operating node scanning of neighbour base stations by detecting preamble correlated to said neighbour base stations from said corresponding frequency domain symbol ($R_N$), and

**in that** said device comprises a timing post processing module (20) for processing said timing offset ($\tau$) and for generating an improved timing offset ($\tau_r$) used to start the sampling of following incoming signal.

2. Device according to claim 1, wherein said timing synchronization and scanning module (10) is suitable for processing, based on commands from a control module (30), a plurality of preambles sent at least by a serving base station (BS) and a neighbour base station, and providing timing offset and signal quality measurement of each preamble to the control module (30), only the timing offset corresponding to the preamble correlated to the serving base station (BS) are sent to the timing post processing module (20).

3. Device according to claim 1 or 2, wherein said timing synchronization and scanning module (10) comprises at least:

- a frequency domain correlation module (11) controlled by the control module (30), for computing and generating at least a channel impulse response (CIR) based at least on the frequency domain symbol corresponding to said preamble correlated to the serving base station;
- a preamble processing module (12) for determining if at least a specific preamble, among the preambles correlated to the serving base station and the neighbour base stations, is present in said incoming signal, for generating a detection decision and for estimating the timing offset ($\tau$) of said specific preamble;
- a statistic processing module (13) for sending at least the detection decision and the timing offset ($\tau$) determined for said specific preamble to the control module (30), and for sending said timing offset of said preamble estimated for the serving base station to the timing post processing module (20).

4. Device according to claim 3 wherein said frequency domain correlation module (11) comprises at least:

- a look-up table module (112) containing at least an inverse of preambles,
- a deconvolution module (115) multiplying the frequency domain symbol with the inverse of a preamble as generated by the look up table (112),
- a third module (116) transforming the result of the multiplication in time domain,
- a windowing module (117) multiplying the result of the deconvolution module (115) with a windowing function to eliminate the distortions caused by discontinuities.

5. Device according to claim 3, wherein said preamble processing module (12) comprises at least:

- a discriminator (122) suitable for differentiating between the useful part of the input channel impulse response (CIR) and a noise floor and for outputting a discriminated channel impulse response,
- means for computing a timing offset from the discriminated channel impulse response.

6. Device according to claim 5, wherein said discriminator (122) generates the power of the channel impulse response when the power of the said channel impulse response is above a predetermined threshold, and generating a zero when the power of the channel impulse response is below the threshold.

7. Device according to any of claims 5 to 6, wherein said preamble processing module (12) is further capable of jointly processing at least two channel impulse responses corresponding to at least two successive symbols.

8. Device according to claim 7, wherein the said preamble processing module is further capable to compute a metric for each of the two discriminated channel impulse responses corresponding to successive symbols.

9. Device according to claim 8, wherein said preamble processing module (12) selects the useful taps for both channel impulse responses by using the discriminated channel impulse response which has the highest metric amongst the two metrics.

10. Device according to claim 5, wherein the timing offset is computed as an average delay of the discriminated channel impulse responses.

11. Method for implementing a device according to any of the claims 1 to 10, in a timing tracking of a serving base station mode, comprising at least the steps of:

- sending to the timing synchronization and scanning module (10) at least:

- an index of an expected preamble in said incoming signal,
- a decimation factor, and
- a decimation offset,

- said timing synchronization and scanning module executes the steps of:

- generating a frequency domain symbol corresponding to said incoming signal,
- detecting a time offset of said preamble by using said frequency domain symbol,
- sending a detection decision according to the expected preamble, and
- sending said timing offset to said timing post processing module,

- said timing post processing module executed the steps of :

- generating an improved timing offset, and
- establishing a sampling instant for following incoming signal.

12. Method according to claim 11, wherein, in a scanning for neighbor base stations in synchronous networks mode, it further comprises at least the steps of:

- sending to the timing synchronization and scanning module at least:

- a list of indexes of expected preambles in said incoming signal,
- a decimation factor, and
- a decimation offset,

- said timing synchronization and scanning module executes at least the steps of:

- generating a frequency domain symbol corresponding to said incoming signal,
- detecting timing offsets of said preambles by using said frequency domain symbol,
- providing at least a set, said set comprising at least:

- an index of an expected preamble among the list of indexes of expected preambles,
- a corresponding detection decision according to said expected preamble of the set,
- a corresponding timing offset,

13. Method according to claim 11 or 12, wherein, in a scanning for neighbor base stations in synchronous networks with large cells mode, it further comprises at least the steps of:

- sending to the timing synchronization and scanning module at least:

- a list of indexes of expected preambles,
- a number of frequency domain symbols where the preambles are going to be searched in the incoming signal,
- a decimation factor, and
- a decimation offset,

- the timing synchronization and scanning module executes at least the steps of:

- generating frequency domain symbols corresponding to said incoming signal,
- detecting timing offsets of said preambles by using said frequency domain symbols,
- providing at least a set, said set comprising at least:

- an index of an expected preamble among the list of index of expected preambles,
- a corresponding detection decision according to said expected preamble of the set,
- a corresponding timing offset,

14. Method according to claim 13, wherein, in a scanning for neighbor base stations in asynchronous networks mode, the number of frequency domain symbols where the preambles are going to be searched is equal to or greater than the number of symbols in a frame.

**Patentansprüche**

1. Vorrichtung zum Bearbeiten wenigstens eines Eingangssignals in einem drahtlos arbeitenden Kommunikationssystem, wobei das Eingangssignal eine Mehrzahl von Signalen umfasst, die von einer Mehrzahl von Basisstationen (BS) kommen, wobei jedes Signal aufeinanderfolgende Frames umfasst und jeder der Frames aufweist wenigstens ein Trainingssymbol oder eine Präambel, dass/die mit einer Basisstation (BS) korreliert, und ein Datensymbol, dass die Mitteilungsdaten trägt, wobei die Vorrichtung wenigstens aufweist:

   - ein erstes Modul (01), das das Eingangssignal digitalisiert und abtastet;
   - ein zweites Modul (02), das das digitalisierte und abgetastete Eingangssignal demoduliert und ein korrespondierendes Frequenzdomainsymbol ($R_N$) erzeugt;
   - ein Zeitsynchronisierungs- und Abtastmodul (10), das geeignet ist, in einem ersten Betriebsmodus eine Zeitsynchronisierung mit einer aktiven Basisstation durchzuführen, durch Erfassen wenigstens einer Zeitverschiebung ($\tau$) der Präambel, die mit der aktiven Basisstation aufgrund des korrespondierenden Frequenzdomainsymbols ($R_N$) korreliert;

   **dadurch gekennzeichnet, dass** das Zeitsynchronisierungs- und Abtastmodul (10) in einem zweiten Betriebsmodus geeignet ist zum Durchführen eines Abtastens der benachbarten Basisstationen durch Detektieren einer Präambel, die mit den benachbarten Basisstationen aufgrund des korrespondierenden Frequenzdomainsymbols ($R_N$) korreliert, und
   dass die Vorrichtung ein Zeitsteuerungs-Nachverarbeitungsmodul (20) zum Bearbeiten der Zeitverschiebung ($\tau$) und zum Erzeugen einer verbesserten Zeitverschiebung ($\tau_r$), die dazu verwendet wird, den Abtastvorgang des folgenden Eingangssignals zu starten.

2. Vorrichtung nach Anspruch 1, in welcher das Zeitsynchronisierungs- und Abtastmodul (10) geeignet ist, basierend auf Befehlen von einem Steuermodul (30) eine Mehrzahl von Präambeln zu verarbeiten, die wenigstens durch eine aktive Basisstation (BS) und eine benachbarte Basisstation gesendet werden und zum Bereitstellen einer Zeitverschiebungs- und Signalqualitätsmessung für jede Präambel am Steuermodul (30), wobei nur die Zeitverschiebung, die mit der Präambel korrespondiert, die mit der aktiven Basisstation (BS) korreliert, zu dem Nachverarbeitungsmodul (20) gesendet wird.

3. Vorrichtung nach Anspruch 1 oder 2, in welcher das Zeitsynchronisierungs- und Abtastmodul (10) wenigstens umfasst:

   - ein Frequenzdomain-Korrelationsmodul (11), das durch das Steuermodul (30) gesteuert wird, um wenigstens eine Kanalimpulsreaktion (CIR) zu berechnen und erzeugen, die auf wenigstens dem Frequenzdomainsymbol basiert, das mit der Präambel korrespondiert, die mit der aktiven Basisstation korreliert;
   - ein Präambel-Bearbeitungsmodul (12) zum Bestimmen, ob wenigstens eine spezifische Präambel unter den Präambeln, die mit der aktiven Basisstation und den benachbarten Basisstationen korreliert, in dem Eingangssignal vorhanden ist, um eine Detektionsentscheidung zu erzeugen und um die Zeitverschiebung ($\tau$) der spezifischen Präambel zu schätzen;
   - ein Statistik-Bearbeitungsmodul (13) zum Senden wenigstens der Detektionsentscheidung und der Zeitverschiebung ($\tau$), der für die spezifische Präambel bestimmt wurde, an das Steuermodul (30) und zum Senden der Zeitverschiebung der Präambel, der für die aktive Basisstation geschätzt wurde, an das Zeitsteuerungs-Nachbearbeitungsmodul (20).

4. Vorrichtung nach Anspruch 3, in welcher das Frequenzdomain-Korrelierungsmodul (11) wenigstens umfasst:

   - ein Wertetabellenmodul (112), das wenigstens eine Umkehrung von Präambeln enthält,
   - ein Enthaltungsmodul (115), das das Frequenzdomainsymbol mit der Umkehrung einer Präambel multipliziert, wie sie durch die Wertetabelle (112) erzeugt wurde,
   - ein drittes Modul (116), welches das Ergebnis der Multiplikation in eine Zeitdomain transformiert,
   - ein Fensterungsmodul (117), welches das Ergebnis des Entfaltungsmoduls (115) mit einer Fensterungsfunktion multipliziert, um die durch Diskontinuitäten verursachten Störungen zu beseitigen.

5. Vorrichtung nach Anspruch 3, in welcher das Präambel-Bearbeitungsmodul (12) wenigstens umfasst:

   - einen Diskriminator (122), der zum Unterscheiden zwischen dem nützlichen Teil der Eingangskanal-Impulsreaktion (CIR) und einem Grundrauschen und zum Ausgeben einer diskriminierten Kanalimpulsantwort,
   - Mittel zum Berechnen einer Zeitverschiebung von der diskriminierten Kanalimpulsantwort.

6. Vorrichtung nach Anspruch 5, in welcher der Diskriminator (122) die Leistung der Kanalimpulsantwort erzeugt, wenn die Leistung der Kanalimpulsantwort über einem vorbestimmten Schwellenwert liegt, und eine Null erzeugt, wenn die Leistung der Kanalimpulsantwort unter dem Schwellenwert liegt.

7. Vorrichtung nach einem der Ansprüche 5 bis 6, in welcher das Präambel-Bearbeitungsmodul (12) ferner dazu geeignet ist, wenigstens zwei Kanalimpulsantworten zusammenzuverarbeiten, die wenigstens mit zwei aufeinanderfolgenden Symbolen korrespondieren.

8. Vorrichtung nach Anspruch 7, in welcher das Präambel-Bearbeitungsmodul ferner dazu geeignet ist, eine Metrik für jede der zwei diskriminierten Kanalimpulsantworten zu berechnen, die mit aufeinanderfolgenden Symbolen korrespondieren.

9. Vorrichtung nach Anspruch 8, in welcher das Präambel-Bearbeitungsmodul (12) nützliche Zapfstellen für beide Kanalimpulsantworten auswählt, indem die diskriminierte Kanalimpulsantwort verwendet wird, welche von den zwei Metrizes die höchste Metrik hat.

10. Vorrichtung nach Anspruch 5, in welcher die Zeitverschiebung als eine mittlere Verzögerung der diskriminierten Kanalimpulsantworten berechnet wird.

11. Verfahren zum Implementieren einer Vorrichtung nach einem der Ansprüche 1 bis 10, in einem Zeitnachführungsmodus einer aktiven Basisstation mit wenigstens den Schritten:

   - Senden an das Zeitsynchronisierungs- und Abtastmodul (10), wenigstens:

     - einen Index einer erwarteten Präambel in dem Eingangssignal,
     - einen Minderungsfaktor, und
     - eine Minderungsverschiebung,

   - wobei das Zeitsynchronisierungs- und Abtastmodul die Schritte ausführt:

     - Erzeugen eines Frequenzdomainsymbols, das mit dem Eingangssignal korrespondiert,
     - Detektieren einer Zeitverschiebung der Präambel durch Verwenden des Frequenzdomainsymbols,
     - Senden einer Detektionsentscheidung entsprechend der erwarteten Präambel, und
     - Senden der Zeitverschiebung an das Zeitsteuerungs-Nachbearbeitungsmodul,

   - wobei das Zeitsteuerungs-Nachbearbeitungsmodul die Schritte ausführt:

     - Erzeugen einer verbesserten Zeitverschiebung, und
     - Etablieren eines sofortigen Abtastvorgangs für das folgende Einganssignal.

12. Verfahren nach Anspruch 11, in welchem ein Abtastmodus für benachbarte Basisstationen im synchronen Netzwerkmodul dieses ferner wenigstens die Schritte umfasst:

   - Senden an das Zeitsynchronisierungs- und Abtastmodul wenigstens:

     - eine Liste von Indizes erwarteter Präambeln in dem Eingangssignal,
     - einen Minderungsfaktor, und
     - eine Minderungsverschiebung,

   - wobei das Zeitsynchronisierungs- und Abtastmodul wenigstens die Schritte ausführt:

     - Erzeugen eines Frequenzdomainsymbols, das mit dem Eingangssignal korrespondiert,

- Detektieren von Zeitverschiebungen der Präambeln durch Verwenden des Frequenzdomainsymbols,
- Bereitstellen wenigstens eines Satzes, wobei der Satz wenigstens umfasst:

  - einen Index einer erwarteten Präambel aus der Liste von Indizes erwarteter Präambeln,
  - eine korrespondierende Detektionsentscheidung gemäß der erwarteten Präambel des Satzes,
  - eine korrespondierende Zeitverschiebung.

13. Verfahren nach Anspruch 11 oder 12, in welchem in einem Abtastmodus für benachbarte Basisstationen in synchronen Netzwerken mit großen Zellen dieses ferner wenigstens die Schritte umfasst:

    - Senden an das Zeitsynchronisierungs- und Abtastmodul wenigstens:

      - eine Liste von Indizes erwarteter Präambeln,
      - eine Anzahl von Frequenzdomainsymbolen, in welchen die Präambeln in dem Eingangssignal gesucht werden sollen,
      - einen Minderungsfaktor, und
      - eine Minderungsverschiebung,

    - wobei das Zeitsynchronisierungs- und Abtastmodul wenigstens die Schritte ausführt:

      - Erzeugen von Frequenzdomainsymbolen, die mit dem Eingangssignal korrespondieren,
      - Detektieren von Zeitverschiebungen der Präambeln durch Verwenden der Frequenzdomainsymbole,
      - Bereitstellen wenigstens eines Satzes, wobei der Satz wenigstens umfasst:
      - einen Index einer erwarteten Präambel aus der Indexliste erwarteter Präambeln;
      - eine korrespondierende Detektionsentscheidung gemäß der erwarteten Präambel des Satzes,
      - eine korrespondierende Zeitverschiebung,

14. Verfahren nach Anspruch 13, in welchem in einem Abtastmodus für benachbarte Basisstationen in asynchrone Netzwerken die Anzahl von Frequenzdomainsymbolen, in welchen die Präambeln gesucht werden sollen, gleich oder größer ist als die Anzahl von Symbolen in einem Frame.

**Revendications**

1. Dispositif pour le traitement d'au moins un signal arrivant dans un système de communication sans fil, ledit signal arrivant comprenant une pluralité de signaux arrivant d'une pluralité de stations de base (BS), chaque signal comprenant des trames successives et chacune desdites trames comprenant au moins un préambule ou symbole d'apprentissage corrélé à une station de base (BS) et une donnée de message portant des symboles de données, ledit dispositif comprenant au moins :

   - un premier module (01) numérisant et échantillonnant le signal arrivant ;
   - un deuxième module (02) démodulant ledit signal arrivant numérisé et échantillonné et générant un symbole de domaine fréquentiel correspondant ($R_N$) ;
   - un module d'exploration et de synchronisation de temporisation (10) adapté pour effectuer dans un premier mode de fonctionnement une synchronisation de temporisation avec une station de base de desserte en détectant au moins un décalage de temps ($\tau$) du préambule corrélé à ladite station de base de desserte à partir dudit symbole de domaine fréquentiel correspondant ($R_N$) ;

   **caractérisé en ce que** ledit module d'exploration et de synchronisation de temporisation (10) est adapté pour effectuer dans un deuxième mode de fonctionnement une exploration de stations de base voisines en détectant le préambule corrélé auxdites stations de base voisines à partir dudit symbole de domaine fréquentiel correspondant ($R_N$), et
   **en ce que** ledit dispositif comprend un module de post-traitement de temporisation (20) pour traiter ledit décalage de temporisation ($\tau$) et pour générer un décalage de temporisation amélioré ($\tau_r$) utilisé pour démarrer l'échantillonnage du signal arrivant suivant.

2. Dispositif selon la revendication 1, dans lequel ledit module d'exploration et de synchronisation de temporisation (10) est adapté pour traiter, sur la base d'instructions provenant d'un module de commande (30), une pluralité de préambules transmis au moins par une station de base de desserte (BS) et une station de base voisine, et fournissant une mesure de qualités de signal et de décalages de temporisation de chaque préambule au module de commande (30), seul les décalages de temporisation correspondant au préambule corrélé à la station de base de desserte (BS) sont transmis au module de post-traitement de temporisation (20).

3.  Dispositif selon la revendication 1 ou 2, dans lequel ledit module d'exploration et de synchronisation de temporisation (10) comprend au moins :

    - un module de correction de domaine fréquentiel (11) commandé par le module de commande (30), pour calculer et générer au moins une réponse impulsionnelle de voie (CIR) basée au moins sur le symbole de domaine fréquentiel correspondant audit préambule corrélé à la station de base de desserte ;
    - un module de traitement de préambules (12) pour déterminer si au moins un préambule spécifique, parmi les préambules corrélés à la station de base de desserte et aux stations de base voisines, est présent dans ledit signal arrivant, pour générer une décision de détection et pour estimer le décalage de temporisation ($\tau$) dudit préambule spécifique ;
    - un module de traitement statistique (13) pour transmettre au moins la décision de détection et le décalage de temporisation ($\tau$) déterminé pour ledit préambule spécifique au module de commande (30), et pour transmettre ledit décalage de temporisation dudit préambule estimé pour la station de base de desserte au module de post-traitement de temporisation (20).

4.  Dispositif selon la revendication 3, dans lequel ledit module de corrélation de domaine fréquentiel (11) comprend au moins :

    - un module de table de recherche (112) contenant au moins un inverse de préambules,
    - un module de déconvolution (115) multipliant le symbole de domaine fréquentiel par l'inverse d'un préambule tel que généré par la table de recherche (112),
    - un troisième module (116) transformant le résultat de la multiplication dans le domaine temporel,
    - un module de fenêtrage (117) multipliant le résultat du module de déconvolution (115) par une fonction de fenêtrage pour éliminer les distorsions provoquées par des discontinuités.

5.  Dispositif selon la revendication 3, dans lequel ledit module de traitement de préambules (12) comprend au moins :

    - un discriminateur (122) adapté pour faire une différenciation entre la partie utile de la réponse impulsionnelle de voie d'entrée (CIR) et un bruit de fond et pour délivrer en sortie une réponse impulsionnelle de la voie discriminée,
    - des moyens pour calculer un décalage de temporisation à partir de la réponse impulsionnelle de la voie discriminée.

6.  Dispositif selon la revendication 5, dans lequel ledit discriminateur (122) génère la puissance de la réponse impulsionnelle de voie quand la puissance de ladite réponse impulsionnelle de voie est supérieure à un seuil prédéterminé, et générer un zéro quand la puissance de la réponse impulsionnelle de voie est inférieure au seuil.

7.  Dispositif selon l'une quelconque des revendications 5 à 6, dans lequel ledit module de traitement de préambules (12) est capable en outre de traiter conjointement au moins deux réponses impulsionnelles de voie discriminées correspondant à au moins deux symboles successifs.

8.  Dispositif selon la revendication 7, dans lequel ledit module de traitement de préambules est capable en outre de calculer une métrique pour chacune des deux réponses impulsionnelles de voie correspondant à des symboles successifs.

9.  Dispositif selon la revendication 8, dans lequel ledit module de traitement de préambules (12) sélectionne les prises utiles pour les deux réponses impulsionnelles de voie en utilisant la réponse impulsionnelle de voie discriminée qui a la plus haute métrique parmi les deux métriques.

10. Dispositif selon la revendication 5, dans lequel le décalage de temporisation est calculé comme un retard moyen des réponses impulsionnelles de voie discriminée.

11. Procédé pour mettre en oeuvre un dispositif selon l'une quelconque des revendications 1 à 10, dans une poursuite de temporisation d'un mode de station de base de desserte, comprenant au moins les étapes consistant à :

- transmettre au module d'exploration et de synchronisation de temporisation (10) au moins :

-- un index d'un préambule prévu dans ledit signal arrivant,
-- un facteur de décimation, et
-- un décalage de décimation,

- ledit module d'exploration et de synchronisation de temporisation exécute les étapes consistant à :

-- générer un symbole de domaine fréquentiel correspondant audit signal arrivant,
-- détecter un décalage de temps dudit préambule en utilisant ledit symbole de domaine fréquentiel,
-- transmettre une décision de détection en fonction du préambule prévu, et
-- transmettre ledit décalage de temporisation audit module de post-traitement de temporisation,

- ledit module de post-traitement de temporisation exécutant les étapes consistant à :

-- générer un décalage de temporisation amélioré, et
-- établir un instant d'échantillonnage pour le signal arrivant suivant.

12. Procédé selon la revendication 11, dans lequel, dans un mode d'exploration de stations de base voisines dans un mode de réseaux synchrones, il comprend en outre au moins les étapes consistant à :

- transmettre au module d'exploration et de synchronisation de temporisation au moins :

-- une liste d'index de préambules prévus dans ledit signal arrivant,
-- un facteur de décimation, et
-- un décalage de décimation,

- ledit module d'exploration et de synchronisation de temporisation exécute au moins les étapes consistant à :

-- générer un symbole de domaine fréquentiel correspondant audit signal arrivant,
-- détecter des décalages de temporisation desdits préambules en utilisant ledit symbole de domaine fréquentiel,
-- fournir au moins un ensemble, ledit ensemble comprenant au moins :

--- un index d'un préambule prévu parmi la liste d'index de préambules prévus,
--- une décision de détection correspondante en fonction dudit préambule prévu de l'ensemble,
--- un décalage de temporisation correspondant.

13. Procédé selon la revendication 11 ou 12, dans lequel, dans une exploration pour des stations de base voisines dans un mode de réseaux synchrones avec grandes cellules, il comprend en outre au moins les étapes consistant à :

- transmettre au module d'exploration et de synchronisation de temporisation au moins :

-- une liste d'index de préambules prévus,
-- une pluralité de symboles de domaine fréquentiel où les préambules seront recherchés dans le signal arrivant,
-- un facteur de décimation, et
-- un décalage de décimation,

- ledit module d'exploration et de synchronisation de temporisation exécute au moins les étapes consistant à :

-- générer des symboles de domaine fréquentiel correspondant audit signal arrivant,
-- détecter des décalages de temporisation desdits préambules en utilisant lesdits symboles de domaine fréquentiel,
-- fournir au moins un ensemble, ledit ensemble comprenant au moins :

--- un index d'un préambule prévu parmi la liste d'index de préambules prévus,
--- une décision de détection correspondante en fonction dudit préambule prévu de l'ensemble,
--- un décalage de temporisation correspondant.

14. Procédé selon la revendication 13, dans lequel, dans une exploration pour des stations de base voisines dans un mode de réseaux asynchrones, le nombre de symboles de domaine de fréquence où les préambules seront recherchés est égal ou supérieur au nombre de symboles dans une trame.

Data from
upper layers → | Transmitter | $x(t)$ → | Channel $h(t)$ | $r(t)$ → | Receiver | → Data for
upper layers

## Fig. 1

## Fig. 2

Guard intervals

| Preamble | | Data symbol #1 | | Data symbol #2 | . . . | | Data symbol #n |

## Fig. 3

01

$r(t)$ → | Analog front-end and Digital front-end | → $r(n)$ → | N point FFT | → $R_N(k)$ → | Channel estimation and compensation | → | Slicer | → | FEC decoder | → Data for upper layers

02 03 04 05

$\tau_r$ ← | Timing post processing | ← $\tau$ ← | Timing synchronization and scanning |

20 10

commands | statistics

| Control |

30

# Fig. 4

$R_N$ → | Frequency domain Correlation (FDC) | → | Preamble processing | → | Preamble post-processing | → | Statistics processing | → $\tau$

11 12 14 13

commands statistics

# Fig. 5

$R_N$ → | Decimation | → $R_L$ → | Multi page memory | → $R_L$ → | Deconvolution | → $Y_L$ → | Windowing | → $Z_L$ → | L-point IFFT | → $CIR_L$

113 114 115 117 116

$s'$ $\dfrac{1}{P_L^i}$ | $W_L$

| LUT |

112

$i$

Timestamp ——————— | Scheduler | ——————— Timestamp

commands

111

# Fig. 6

123    121    122

CIR$_L$ → Memory → CIR$_L$(d) → | |$^2$ → P → Discriminator → P$_i$ → Sliding sum → SP$_i$ → Max search over SP$_i$ → SP$_i^{max}$ → Division → d$_{avg}$

d → DP$_i$ → Sliding sum → SDP$_i$ → SDP$_i^{max}$

## Fig. 7

SP$_i^{(1)}$ → Power correction → Pwr

SP$_i^{(2)}$ → Compute wapping factor → COR

$\frac{N}{T}T_s$

$\frac{N}{TL}T_s$

d$_{avg}$ → τ

Timestamp

## Fig. 8

Guard intervals    Ideal position of the current preamble    Data symbols

Symbol index    -1    0    1    2    ...    Ns-1

Capturing window for tracking    Pc

Capturing window for small cells scanning

Capturing window for large cells scanning

Capturing window for asynchronous networks scanning

## Fig. 9

Guard intervals    Ideal position of the    Data symbols
                   current preamble

| | -1 | | 0 | | 1 | | 2 | ... | | Ns-1 |

Observation window
for tracking

Observation window
for small cells
scanning

Observation window
for large cells
scanning

Observation window
for asynchronous
networks scanning

# Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1193933 A